Europäisches Patentamt

European Patent Office

Office européen des brevets

(11) Numéro de publication: **0 154 604**
**A1**

(12) **DEMANDE DE BREVET EUROPEEN**

(21) Numéro de dépôt: **85810018.3**

(22) Date de dépôt: **22.01.85**

(51) Int. Cl.⁴: **C 09 D 11/02**

(30) Priorité: **07.02.84 CH 567/84**

(43) Date de publication de la demande:
**11.09.85 Bulletin 85/37**

(84) Etats contractants désignés:
**AT BE DE FR GB IT NL SE**

(71) Demandeur: **SICPA HOLDING S.A.**
**Hauptstrasse 8**
**CH-8750 Glarus(CH)**

(72) Inventeur: **Amon, Albert**
**26, Avenue Secrétan**
**CH-1005 Lausanne(CH)**

(72) Inventeur: **Panos, Dimitrios**

**CH-1606 Forel-Lavaux(CH)**

(74) Mandataire: **Roth, Pierre et al,**
**PIERRE ARDIN & CIE 22, rue du Mont-Blanc**
**CH-1211 Genève 1(CH)**

(54) Procédé pour la préparation extemporanée d'une encre et mélange pulvérulent pour la mise en oeuvre de ce procédé.

㊗ Un mélange pulvérulent filmogène comprenant au moins un pigment et une résine est incorporé à un solvant à raison d'une partie en poids du mélange pulvérulent pour deux parties en poids de solvant.

On obtient ainsi une encre pour impression en héliogravure ou en flexographie prête à l'emploi.

EP 0 154 604 A1

## Procédé pour la préparation extemporanée d'une encre et mélange pulvérulent pour la mise en oeuvre de ce procédé

La présente invention a pour objet un procédé pour la préparation extemporanée d'une encre pour impression en héliogravure ou en flexographie.

Les encres pour impression en héliogravure ou en flexographie actuellement sur le marché, prêtes à l'emploi comprennent des pigments et résines incorporés dans des solvants organiques ou aqueux de viscosité relativement basse et volatiles. Il en résulte des sédimentations lors de l'entreposage de telles encres qui rendent nécessaire une redispersion des pigments dans le solvant, au moyen d'un agitateur mécanique, avant l'utilisation de l'encre. Même après cette redispersion des pigments l'imprimeur n'est pas assuré de l'homogénéité de l'encre et de retrouver sa puissance tinctorielle.

Pour remédier à cet inconvénient, ce procédé pour la préparation extemporanée d'une encre pour impression en héliogravure ou en flexographie est caractérisé en ce qu'on prélève d'un mélange pulvérulent filmogène comprenant au moins un pigment et une résine et qu'on l'incorpore dans au moins un solvant.

Un mélange pulvérulent filmogène pour la mise en oeuvre du procédé comprend un ou plusieurs pigments sous forme de particules de 1 à 300 microns choisis entre autres parmi des pigments minéraux ou organiques enrobés ou non dans des résines et/ou agents surfactants portant les désignations usuelles suivantes :

| | |
|---|---|
| Jaunes Hansa | Vert de phtalocyanine |
| Jaunes de Benzidine | Bleu de Phtalocyanine |
| Jaunes de Chrome | Bleu Reflex |
| Orange de Benzidine | Bleu de Milori |
| Rouge pour laque C | Violet Fanal |
| Rubine 4 B | Noirs de Fumée |
| Rhodamine 6 G | Blancs de Titane |
| Quinacridone | |

et au moins une résine sous forme de particules de 1 à 300 microns, choisis entre autres parmi des résines usuelles dans la fabrication d'encre telles que :

colophane estérifiée

sels de colophane

colophane maléinisée

résines maléiques et leurs esters

gomme laque

résines phénoliques pures et modifiées

alkydes solides

résines polystyréniques et leurs copolymères

résines terpéniques

résines de silicone

polyamides et polyimides

caoutchouc chloré

acétates polyvinyliques

alcools polyvinyliques

résines cétoniques

résines acryliques

résines époxydées

dérivés cellulosiques


Un plastifiant sous forme de particules de 1 à 300 microns tel que le Citrate de tricyclohexyle le Triphénylphosphate le Dicyclo hexylphtalate le Dihydroabietylphtalate le Toluène sulfonamide

et/ou


une cire de polyéthylène micronisée une cire de polytétrafluoro éthylène micronisée une cire de paraffine halogèné une cire d'amide d'acide gras une cire de paraffine une cire naturelle micronisée peuvent encore être incorporés au mélange pulvérulent.

Le mélange pulvérulent filmogène susdit dont la dimention des particules est de préférence de l'ordre de 1 à 300 microns peut encore comprendre au moins une charge de particules de dimensions sensiblement identiques choisies, entre autres, parmi le carbonate de calcium, le sulfate de barium, les hydrates et silicates d'alumine et les oxydes de silicium.

Ce mélange pulvérulent est destiné à être livré aux imprimeurs dans des récipients étanches assurant un excellent entreposage.

## Exemple 1

1 kg de mélange pulvérulent filmogène destiné à la préparation d'une encre bleue pour impression sur papier en héliogravure comprend 280 gr de pigment bleu de phtalocyamine enrobé dans 100 gr de nitrocellulose et dans 20 gr de D.O.P. (dioctyle phtalate), 500 gr de résine abiéto-maléique acide de point de fusion compris entre 130 et 150°C, 50 gr d'éthylcellulose N-7, 30 gr de cire polyéthylène micronisée et 20 gr de phtalate de dicyclohexyle.

## Exemple 2

1 kg de mélange pulvérulent filmogène destiné à la préparation d'une encre blanche pour impression sur papier en héliogravure comprend 550 gr de blanc de titane en poudre, 260 gr de résine abiéto-maléique acide de point de fusion compris entre 130 et 150°C, 150 gr d'éthylcellulose N-22, 20 gr de cire polyéthylène micronisée et 20 gr de phtalate de dicyclohexyle.

## Exemple 3

1 kg de mélange pulvérulent filmogène destiné à la préparation d'une encre bleue pour impression sur film en matière plastique en héliogravure comprend 315 gr de pigment bleu de phtalocyamine enrobé dans 112,5 gr de nitrocellulose et 22,5 gr de D.O.P, 550 gr de polyamide soluble dans l'alcool, de point de fusion compris entre 80 et 90°C.

La préparation extemporanée d'une encre pour impression en héliogravure à partir de ces mélanges pulvérulents est particulièrement aisée et à la portée d'un imprimeur non initié à la fabrication d'encres. Il suffit, en effet de les incorporer à un mélange de solvant contenant 40% d'alcool éthylique, 52% d'acétate d'isopropyle et 8% d'éthylglycol, comme suit :

Dans une cuve on introduit deux parties en poids du mélange de solvant et une partie en poids de mélange pulvérulent filmogène et on expose l'ensemble de ces composants à l'action d'un agitateur muni d'une turbine tournant à une vitesse de 1500 tours/minutes pendant 1/2 heure. La résine et le plastifiant se dissolvent ainsi dans le solvant et le reste du mélange pulvérulent est dispersé dans le solvant.

On obtient ainsi une encre dont la viscosité est comprise entre 1 à 2000 millipascal-seconde.

# REVENDICATIONS

1. Procédé pour la préparation extemporanée d'une encre pour impression en héliogravure ou en flexographie caractérisé en ce qu'on prélève un mélange pulvérulent filmogène comprenant au moins un pigment et une résine d'origine synthétique ou végétale et qu'on l'incorpore dans au moins un solvant.

2. Procédé selon la revendication 1, caractérisé en ce que le mélange pulvérulent filmogène comprend encore un plastifiant solide.

3. Procédé selon la revendication 1, caractérisé en ce que le mélange pulvérulent filmogène comprend encore une cire naturelle ou synthétique.

4. Procédé selon la revendication 1, caractérisé en ce que le mélange pulvérulent filmogène comprend encore au moins un plastifiant solide et une cire micronisée.

5. Procédé selon la revendication 1, caractérisé en ce que le mélange pulvérulent filmogène comprend encore au moins un additif choisi parmi les antioxydants, agents surfactants et agents olfactifs.

6. Procédé selon l'une des revendications 1 à 5, caractérisé en ce que le mélange pulvérulent filmogène comprend encore au moins unecharge.

7. Procédé selon l'une des revendications 1 à 6, caractérisé en ce que le mélange pulvérulent filmogène est incorporé dans un solvant organique.

8. Procédé selon la revendication 7, caractérisé en ce que le mélange pulvérulent filmogène est incorporé dans un mélange d'alcool éthylique et d'acétate d'éthyle.

9. Procédé selon l'une des revendications 1 à 6, caractérisé en ce que le mélange pulvérulent filmogène est incorporé dans un solvant aqueux.

10. Procédé selon la revendication 9, caractérisé en ce que le mélange pulvérulent filmogène est incorporé dans un mélange d'eau et de triéthanolamine.

11. Procédé selon l'une des revendications 1 à 6, caractérisé en ce qu'on incorpore dans un solvant un mélange pulvérulent filmogène dont la grandeur des particules est compris entre 1 et 300 microns.

12. Procédé selon la revendication 11, caractérisé en ce qu'on incorpore dans un solvant un mélange pulvérulent filmogène dont la grandeur des particules est compris entre 1 à 100 microns.

13. Procédé selon l'une des revendications 1 à 10, caractérisé en ce que le mélange pulvérulent filmogène est incorporé dans un solvant permettant d'obtenir une encre de viscosité comprise entre 1 à 2000 millipascal-seconde.

14. Mélange pulvérulent filmogène pour la mise en oeuvre du procédé selon l'une des revendications 1 à 5 caractérisé en ce qu'il comprend au moins un pigment choisi entre autres parmi les pigments de couleur blanche, noire, jaune, orange, rouge, violette, bleu et verte.

15. Mélange pulvérulent selon la revendication 14 pour la mise en oeuvre du prodécé selon l'une des revendications 1 à 6, caractérisé en ce qu'il comprend au moins une résine choisie entre autres parmi les résines à base de colophane, les résines vinyliques et leurs dérivés, les résines phénoliques et leurs- dérivés, les résines cellulosiques et leurs dérivés, les résines polyester et leurs dérivés, les polyamides et leurs dérivés, les résines cétoniques et leurs dérivés et les résines à base de gomme laque, les résines à base de silicone.

16. Mélange pulvérulent selon la revendication 14, pour la mise en oeuvre du procédé selon l'une des revendications 1 à 6 caractérisé en ce qu'il comprend au moins une plastifiant choisi entre autre parmi les dérivés de l'anhydride phtalique, des phosphates organiques, des dérivés sulfonamides et autres dérivés d'acides organiques.

17. Mélange pulvérulent selon la revendication 14, pour la mise en oeuvre du procédé selon l'une des revendications 1 à 6, caractérisé en ce qu'il comprend au moins une cire en poudre ou micronisée choisie entre autre parmi les cires naturelles, de paraffine, d'amides d'acides gras, d'hydrocarbures halogénés de polyfluoroéthylène, de polyéthylène et de silicone.

18. Mélange pulvérulent selon la revendication 14, pour la mise en oeuvre du procédé selon l'une des revendications 1 à 6, caractérisé en ce qu'il comprend au moins une charge choisie entre autres parmi le carbonate de calcium, le sulfate de barium, les hydrates et silicates d'alumine et les oxydes de silicium.

19. Application du procédé selon l'une des revendications 1 à 13 à l'impression en héliogravure ou en flexographie de supports en papier, matière plastique ou feuille métallique.

Office européen
des brevets

**RAPPORT DE RECHERCHE EUROPEENNE**

EP   85 81 0018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X,Y | CH-A- 435 336 (G. PUCHER)<br><br>* Revendication; paragraphe 3; exemple * | 1,5,7, 14,15, 19 | C 09 D   11/02 |
| Y | CH-A- 387 670 (G. PUCHER)<br><br>* Revendications 1-3, sous-revendications 4,5 * | 1,5,7, 14,15, 19 | |
| A | MC-A- 1 123 (ENCOPLAST)<br>* Revendication 1 * | 1 | |
| A | US-A-4 163 001 (C.G.CARUMPALOS)<br>* Résumé * | 1 | |

DOMAINES TECHNIQUES
RECHERCHES (Int. Cl 4)

C 09 D

Le présent rapport de recherche a été établi pour toutes les revendications

| Lieu de la recherche<br>LA HAYE | Date d'achèvement de la recherche<br>23-05-1985 | Examinateur<br>DE ROECK R.G. |
|---|---|---|